# FASCICULE DE BREVET EUROPEEN

(11) **EP 0 386 090 B1**
(45) Date de publication et mention de la délivrance du brevet: **09.02.1994**
(21) Numéro de dépôt: 88910056.6
(22) Date de dépôt: 08.11.1988
(51) Int. Cl.: A47J 37/12, A47J 37/00

(54) **DISPOSITIF D'UNITE DE CUISSON UNIVERSEL**
VIELSEITIGE KOCHEINRICHTUNG
UNIVERSAL COOKING UNIT

(30) Priorité: 09.11.1987 FR 8715613
(43) Date de publication de la demande: 12.09.1990
(73) Titulaire: Grandi, René, F-38300 Bourgoin Jallieu (FR)
(72) Inventeur: Grandi, René, F-38300 Bourgoin Jallieu (FR)
(74) Mandataire: Roman, Michel
(86) Numéro de dépôt international: FR8800547
(87) Numéro de publication internationale: WO8904131

(56) Documents cités:
- EP-A- 0 143 066
- FR-A- 2 050 900
- FR-A- 2 374 874
- FR-A- 2 564 289
- FR-A- 2 564 699
- GB-A- 621 821
- GB-A- 829 269
- US-A- 1 659 415
- US-A- 3 156 177
- US-A- 3 809 777
- US-A- 4 064 796
- US-A- 4 084 492

## Description

Il est connu différents dispositifs de cuisson à l'huile ou à l'eau, dans une capacité non fermée, sinon d'un simple couvercle, et dont l'énergie électrique composée de résistances pour la montée en température des éléments tels que l'huile et l'eau cohabite avec cette même capacité, dans la même enceinte de cuisson, ceci même à des niveaux différents.

Il est connu également, toujours en capacité non fermée, dans laquelle des paniers contenant les produits à cuire, sont plongés dans l'huile ou l'eau, au moyen d'un "monte et baisse". Pour ce type d'appareil, l'énergie nécessaire à la production de température, est logée sous la capacité de cuisson.

Dans tous les systèmes connus, l'énergie calorifique pour la montée en température des éléments cohabite avec la capacité de cuisson, et on ne peut propulser, ni pulvériser d'huile dans une enceinte non close hermétiquement, car l'huile s'enflammerait au contact de la haute température des résistances électriques et de l'oxygène.

Le brevet GB 621 821 (CRITTALL KITCHEN) décrit un appareil de cuisson à différents moyens: par pulvérisation d'huile, d'eau ou de vapeur sous pression avec filtrage en continu, comportant une chambre de cuisson et une chambre thermique séparées, dans lequel la chambre de cuisson est équipée d'un tiroir d'introduction et d'évacuation des produits à traiter ainsi que de moyens permettant d'effectuer la cuisson soit par pulvérisation d'huile soit par vaporisation d'eau et, d'autre part, la chambre thermique où se trouvent les moyens de montée en température de l'élément liquide tel que huile ou eau, est pourvue d'un moyen permettant de maintenir constant le niveau de liquide.

Le brevet US 4 064 796 (John R. JONES) concerne un appareil pour la cuisson d'aliments variés et comportant une enceinte de cuisson équipée de rampes de pulvérisation d'huile, cette huilé étant chauffée dans un compartiment séparé de l'enceinte de cuisson.

Toutefois, ces appareils ne permettent ni la cuisson par immersion ni la cuisson à pression réduite.

Le dispositif qui va être décrit évite ces inconvénients, et permet de cuire avec très peu d'huile ou d'eau les aliments à traiter, et permet son utilisation avec le maximum de sécurité.

Il est composé d'une enceinte, comportant une chambre de cuisson où sont introduits les produits à traiter, et une chambre thermique où l'élément liquide, huile ou eau, est monté en température, pour ensuite, par un réseau de tuyauteries et par une pompe, aller cuire les produits dans ladite chambre de cuisson.

Cette chambre de cuisson est totalement séparée de la chambre thermique, et fermée hermétiquement, elle peut même être sous vide, permettant ainsi une cuisson à basse température. Les vapeurs sont récupérées dans des condenseurs à refroidissement par ailettes ou par eau, ou par air.

Ce dispositif a également la possibilité de récupérer l'huile, et de venir la stocker sur un réservoir supérieur, afin de permettre la vidange de la machine, pour toute intervention de nettoyage, dépannage etc..., ou tout simplement pour changer de type de cuisson : de passer de l'huile à l'eau ou vapeur, sans pour cela avoir à évacuer totalement l'huile, celle-ci étant stockée dans ce réservoir supérieur.

Le retour à ce réservoir se faisant uniquement en fin de période de cuisson afin de permettre un nettoyage sous pression de toutes les parties de l'enceinte de cuisson et également de la chambre thermique et de son environnement, sans que l'huile soit souillée pendant cette action.

Toutes ces opérations sont prises en charge par une armoire électronique accouplée au dispositif, et qui par différents pièges empêchera toute fausse manoeuvre.

Ce réservoir sert également à alimenter la chambre thermique uniquement en huile, et permet d'avoir un niveau constant de cette huile, pendant l'utilisation de la cuisson, ceci par un niveau flotteur qui maintient la quantité d'huile nécessaire, et régule en permanence le niveau de cette huile qui s'élimine pendant les cuissons.

Des cordons chauffants sont mis en place dans cette réserve supérieure, pour faire fondre les graisses spéciales, qui peuvent être utilisées, et qui sont figées à l'état de froid, leur permettant de descendre dans la chambre thermique sous forme de liquide, avant de prendre le même chemin préférentiel de chauffage pour la cuisson des produits.

L'alimentation et l'évacuation des produits à traiter dans la chambre de cuisson se feront par des portes guillotines motorisées, qui viendront se fermer très hermétiquement, pour éviter toute éclaboussure pendant le traitement sous pression, avec des bavettes et un sas adéquat.

Cet approvisionnement ou évacuation des produits à la chambre de cuisson pouvant être manuel ou bien entièrement automatisé, et peut également fonctionner avec un tapis en continu pour la cuisson en vrac dans l'agro-alimentaire. Sinon le conditionnement des produits se fera dans des bacs gastro-normes, ces dits bacs pouvant eux-mêmes être conditionnés dans des paniers de transport, toutes les profondeurs pouvant être utilisées, selon que le modèle s'adapte à la chambre de cuisson.

Ces paniers-bacs sont amenés par un convoyeur, ou tout simplement posés dans un tiroir qui est ensuite introduit à l'intérieur de la chambre de cuisson.

En grande cuisine et en automatisation, les paniers viennent se positionner dans le tiroir sur lequel un joint adéquat sur toute sa périphérie permet la fermeture étanche, un moteur équipé d'une crémaillère, ou manuellement une poignée vient fermer en pression le tiroir porteur des paniers.

Pour l'utilisation en automatique et du moteur à crémaillère, une came de compression tient le tiroir fermé en pression afin que le joint soit utilisé dans de bonnes conditions d'étanchéité.

Un joint gonflant peut également être utilisé.

Dès l'introduction des paniers une pompe et son moteur , à une haute pression de 60 bars ou moins ou plus, vient de la chambre thermique, atomiser l'huile ou vaporiser l'eau, en vapeur ou en jets selon le mode de cuisson désiré, sur les produits se trouvant dans la chambre de cuisson.

Lesdits liquides ayant été atomisés ou vaporisés sous pression par dessus, par dessous et même par les parois sur les produits à traiter, à travers les buses, ces liquides retournent à l'aide d'un plan incliné, se faire régénérer dans la chambre thermique, qui est réchauffée par un chemin préférentiel, pour que les liquides qui ont perdu leur puissance calorifique , soient régénérés et surchauffés pour reprendre ensuite le chemin de la chambre de cuisson par l'intermédiaire de la pompe pression. Un contrôle des températures est effectué à la sortie des buses, les liquides réchauffés devant être à une température constante, le cycle établi. Les températures étant modulées suivant les produits à cuire.

Cette vaporisation ou atomisation s'effectuant sous pression dans une chambre de cuisson étanche, en absence d'air et d'oxygène et à une haute température, les liquides tels que l'huile, ne peuvent s'enflammer.

On peut également par une autre combinaison ne pas utiliser la vaporisation-pression comme moyen de cuisson on utilisera alors un moyen tout à fait classique, c'est-à-dire la cuisson par immersion des produits dans l'huile ou dans l'eau, la projection n'est plus sous pression mais sert uniquement à alimenter la capacité de la chambre de cuisson. L'orifice de retour à la chambre thermique étant fermé, le niveau des liquides monte et immerge les produits à cuire, un trop plein vient déverser les excédents qui retournent au chemin préférentiel de remontée en température, de la chambre thermique, poursuivant le cycle identique de ralimentation de la chambre de cuisson. Les buses fonctionnant de manière identique, mais avec un niveau allant jusqu'au trop plein.

Une évacuation directe par une soupape-volet permet l'évacuation des buées en passant plus par le condenseur.

Pour une cuisson spécifique telle les pâtes, les buses ont la fonction de les brasser en permanence, car une intervention manuelle ne peut intervenir pour les remuer, évitant qu'elles ne se collent. Ces buses en projection présentent un véritable bain à remous qui a toute son utilité pour favoriser un bon échange thermique pendant la cuisson, et cela permet également l'élimination forcée des amidons et féculents par le trop plein, qui seront récupérés par un premier filtre, dans la chambre thermique. Ce filtre retiendra aussi tous les déchets, entre autre les peaux de légumes.

Pour renforcer la filtration, un deuxième filtre à la finesse de mailles différentes, se trouve à la suite du premier.

La chambre de cuisson est équipée d'une soupape de sécurité. Cette chambre de cuisson est également équipée d'un grill-salamandre pour gratiner soit en début soit en fin de cuisson, permettant ainsi de cuisiner à des modes différents, ceci s'appliquant surtout aux petits formats de cuisines. Pour effectuer par exemple un sauté d'agneau:
On produit le bac dans la chambre de cuisson par le tiroir jointé, le grill-salamandre vient dorer le produit, puis on ouvre le tiroir pour permettre de brasser et saupoudrer de farine, puis on remet encore légèrement à gratiner, pour ensuite ouvrir de nouveau et mouiller soit au vin blanc soit à l'eau ou marinade , puis on couvre le tout avec un couvercle jointé, et on introduit de nouveau le tiroir, et la cuisson s'effectue dans une ambiance à vapeur fluente (cuisson à type étouffade).

Pour ce type de cuisson, on utilisera des bacs non perforés, en revanche si l'on voudra cuire directement en vapeur fluante, on utilisera des bacs perforés, ce qui permettra de dégraisser les viandes. Une fois la cuisson terminée, on stoppe la production de vapeur, puis on fait agir la salamandre pour dorer les viandes. Pour produire directement de la vapeur fluante dans la chambre de cuisson, des résistances sont installées sous la capacité de chambre de cuisson.

On peut également utiliser dans ce dispositif une turbine permettant de pulser de l'air au travers de la salamandre, pouvant effectuer ainsi une cuisson à air pulsé.

La gestion de toutes ces fonctions étant asservies par des commandes électroniques pré-établies sur un boîtier de commandes. Ce dispositif permet de composer des modules à volonté: deux, trois, quatre ou plus. Chacun de ces modules pouvant être autonome par rapport à l'autre et effectuer sa propre cuisson avec des temps différents, et avoir sa propre chambre thermique avec sa pompe d'injection, mais plusieurs modules peuvent également dépendre d'une seule chambre thermique qui asservirait plusieurs entrées de modules de chambres de cuisson.

Ces cas spécifiques pourraient convenir pour l'agro-alimentaire qui aurait un seul type de produit avec un seul temps de cuisson à effectuer.

Ce dispositif avec entrée et évacuation identique à ce qui a été décrit, mais équipé d'un compresseur de froid et d'un évaporateur permettrait de refroidir les produits qui ont été cuits puis ventilés sous un portique.

Les deux dispositifs en chaud et en froid pouvant être accouplés, effectuant ainsi une cuisson et un refroidisement rapide, sans rupture de chaîne et de refroidir les produits avant qu'ils ne redescendent au-dessous de 65°.

Les bacs et paniers étant identiques pour la cuisson et le refroidissement.

Les dessins ci-annexés sont donnés à titre d'exemple non limitatif sur des formes de réalisation de l'objet de l'invention:
La figure 1 montre le dispositif en coupe dans son ensemble et en cours de cuisson.
La figure 2 représente en coupe le dispositif dans un mode de disposition différent de la chambre thermique et de la chambre de cuisson, mais restant un équivalent donné à titre d'exemple. Sur cette figure 2, la chambre de cuisson est en cours de chargement.
La figure 3 représente le dispositif, pour le refroidissement, équipé d'évaporateurs et de turbines permettant de refroidir les produits, le chargement et déchargement s'effectuant de manière identique au dispositif de cuisson, par un tiroir muni de joints.
La figure 4 représente vue en perspective, une chaîne de cuisson et de refroidissement avec le dispositif objet de l'invention.
La figure 5 représente, en perspective extérieure le dispositif de capacité moins importante, avec avancement et introduction du tiroir manuel.
La figure 6 représente le dispositif en perspective, de grosse capacité, pour la cuisson en continu ou " pas à pas " de produits en vrac.
La figure 7 représente une des formes du dispositif, en perspective en automatisation et avec plusieurs tiroirs d'introduction.

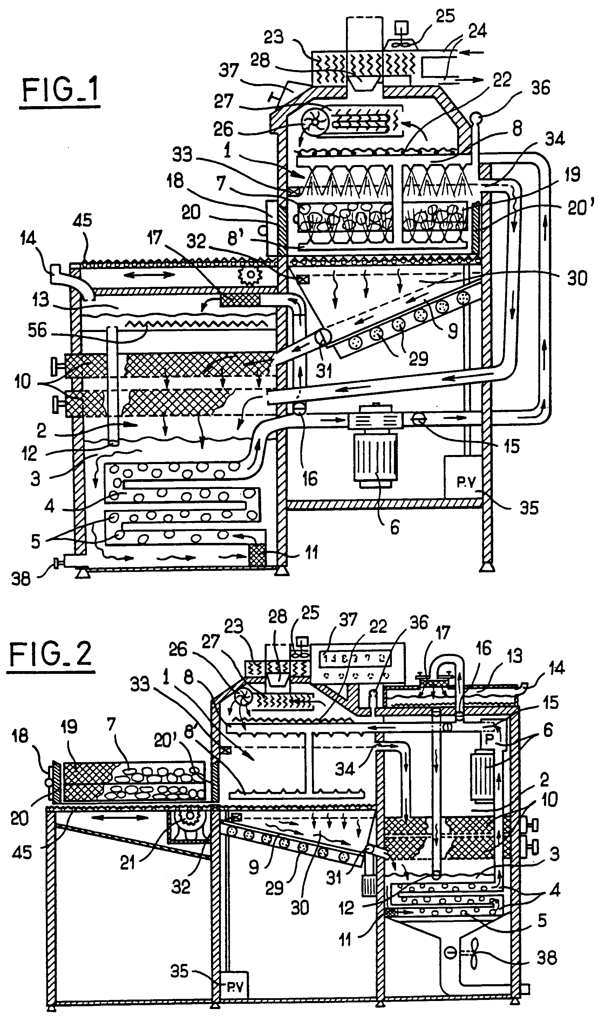

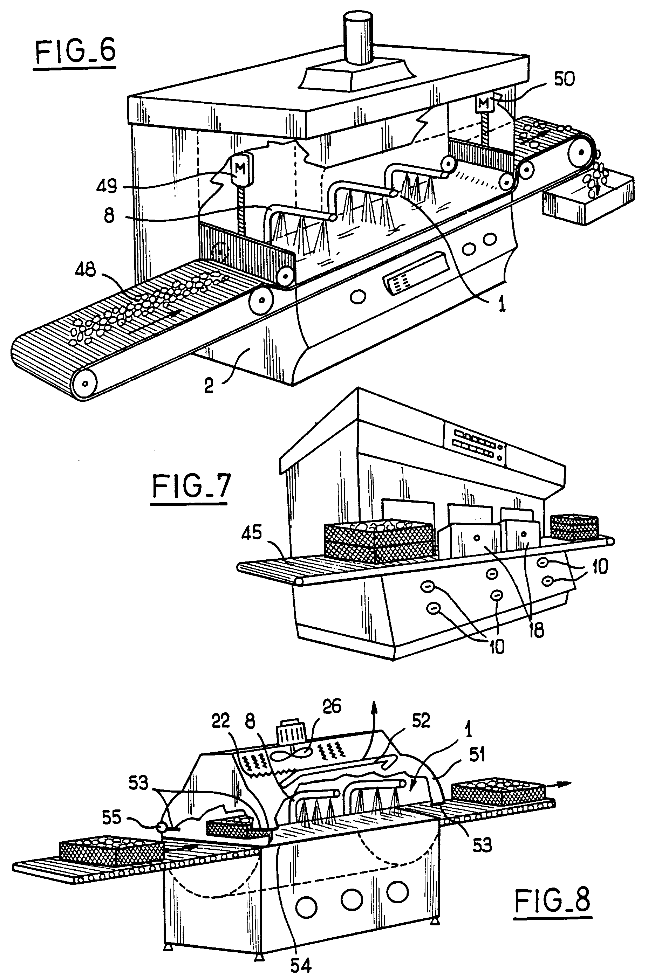

La figure 8 représente en perspective une autre forme de réalisation du dispositif, mais avec un couvercle supérieur s'ouvrant manuellement pour l'introduction et évacuation des produits traités. Le dispositif représenté sur les figures 1 et 2 comporte une chambre de cuisson 1, séparée de la chambre thermique 2, laquelle contient l'eau ou l'huile 3 qui passe se faire chauffer par un chemin préférentiel 4 muni de fourreaux électriques 5. Une pompe 6 vient aspirer les liquides pour les pulvériser ou vaporiser sur les produits à traiter 7 par les rampes-buses 8,8', les liquides, eau ou huile sont récupérés par un plan incliné 9 et passent par des filtres 10 démontables et nettoyables et à mailles différentes pour une meilleure filtration.

Ces liquides retournent ensuite se faire régénérer et réchauffer dans le chemin préférentiel 4, en passant par un autre filtre 11. Dans la chambre thermique 2, les liquides sont maintenus par un niveau constant 12, qui est alimenté par le réservoir 13 qui lui-même est rempli par le bouchon 14.

Le réservoir 13, a également la capacité pour récupérer les huiles du chemin préférentiel 4, et de les stocker notamment si l'on veut passer à la cuisson à l'eau ou vapeur, ou bien pour toute intervention de nettoyage ou de dépannage.

Pour ce stockage dans le réservoir 13, on ferme la vanne 15 empêchant la pompe 6 d'envoyer l'huile dans la chambre de cuisson, et on ouvre la vanne 16, afin que l'huile puisse aller dans le réservoir 13, passant par un nouveau filtre 17.Un cordon chauffant 56 permet de faire fondre les graisses spéciales ou les huiles figées pouvant être utilisées.

Les produits à traiter, sont introduits dans un tiroir 18 dans des bacs gastronormes ou des paniers 19, ce tiroir est muni de joints 20, gonflants ou non, à ses deux extrémités d'un côté venant fermer hermétiquement la chambre pendant la cuisson, et de l'autre côté 20', pour fermer la chambre au moment du chargement du tiroir 18, évitant l'échappement de la vapeur notamment hors du dispositif. Ces joints pouvant être fermés en pression. Une crémaillère 21 motorisée ou non permet l'introduction du tiroir 18 dans la chambre de cuisson 1 par un tapis à galets 45.

Une salamandre ou grill 22 vient dorer ou gratiner les produits, mais elle ne peut fonctionner pendant la propulsion de l'huile, afin que celle-ci ne s'enflamme.

Un condenseur à eau 23, avec arrivée et sortie de l'eau 24 ou un condenseur à air avec turbine 25, vient récupérer les vapeurs ou condensats excédents.

Pour la cuisson à air pulsé ou à vapeur surchauffée, une turbine tangentielle 26, avec un réseau de résistances électriques 27 permet de propulser de l'air chaud.

Une vanne motorisée 28 permet alors de fermer hermétiquement ou pas le condenseur 23 ou 25.

Pour la cuisson en immergé, huile ou eau, ou en vapeur fluente, ou vapeur pression, des fourreaux électriques 29 chauffent la capacité 30, la vanne 31 permettant l'écoulement du plan incliné 9, est alors fermée.

Un flotteur 32 permet de tenir le niveau de l'eau bas, pour la cuisson vapeur, et un autre flotteur 33 permet de garder le niveau de l'eau haut, pour la cuisson en immergé, jusqu'au trop plein 34.

Une pompe 35 permet égalemenr une cuisson sous vide.

Une soupape de sécurité 36 permettant l'évacuation de tout surplus de vapeur ou d'air.

Toutes les différentes opérations étant pilotées au pupitre de commandes 37.

Un robinet 38 permet la vidange générale du dispositif.

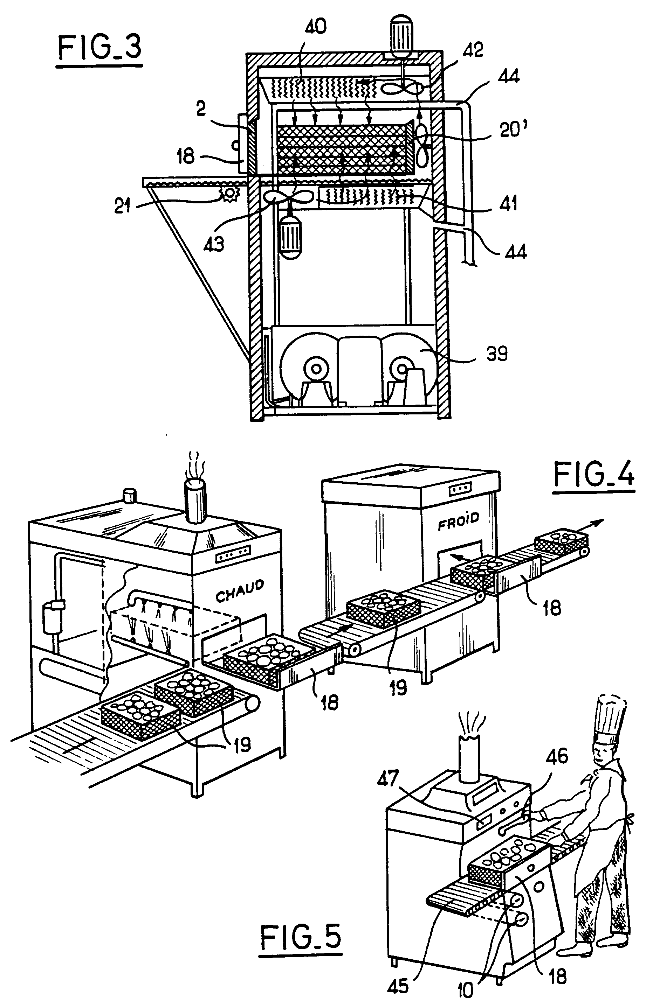

Le dispositif représenté, figure 3, comporte un compresseur 39, des évaporateurs 40 et 41, avec leurs turbines 42 et 43, un réseau de récupération 44 des eaux de dégivrage.

Les produits à réfrigérer étant également contenus dans le tiroir muni des joints 20, 20'.

L'introduction se faisant également par une crémaillère motorisée 21.

La figure 4 comporte le dispositif de cuisson et le dispositif de réfrigération qui viennent d'être décrits, avec des paniers de produits 19, introduits dans le tiroir 18, le tout formant une chaîne en continu de traitement des produits.

Le dispositif représenté figure 5, comporte un tiroir 18 qui est avancé manuellement sur un tapis à galets. La fermeture hermétique est l'ouverture se faisant par la poignée 46.

Les filtres 10 étant facilement accessibles pour leur nettoyage.

La programmation de ce petit dispositif se faisant par une minuterie 47.

Le dispositif représenté figure 6, comporte pour la cuisson en vrac et en continu, un tapis 48 motorisé 49, 50. Des rampes à buses 8 pour la pulvérisation ou vaporisation des liquides dans la chambre de cuisson 1, et la chambre thermique 2.

Le dispopsitif représenté figure 7, comporte un tapis à galets 45, plusieurs tiroirs 18, les filtres 10. Ceci pour une grande capacité de cuisson.

Le dispositif représenté figure 8, comporte un couvercle 51 actionné par une poignée 52, et qui vient se fermer hermétiquement par des joints 53, 54 identiques au dispositif figure 1. La chambre de cuisson 1 et les rampes à buses 8, avec la salamandre 22 et la turbine 26.

Des vérins 55 viennent assister les mouvements d'ouverture et fermeture du couvercle 51.

Toutefois les formes, les dimensions et les moyens mis en oeuvre pour la réalisation du dispopsitif qui vient d'être décrit, pourront varier avec la limite des équivalents.

## Revendications

1. Dispositif d'unité de cuisson à différents moyens: par pulvérisation d'huile, d'eau ou de vapeur sous pression, avec filtrage en continu, comportant une chambre de cuisson (1) et une chambre thermique (2) séparées, dans lequel la chambre de cuisson est équipée d'un tiroir (18) d'introduction et d'évacuation des produits à traiter ainsi que de moyens (8, 8') permettant d'effectuer la cuisson soit par pulvérisation d'huile soit par vaporisation d'eau et, d'autre part, la chambre thermique où se trouvent les moyens de montée en température (4, 5) de l'élément liquide tel que huile ou eau, est pourvue d'un moyen permettant de maintenir constant le niveau de liquide,
caractérisé par le fait que la chambre de cuisson (1) et la chambre thermique (2) sont complètement séparées et que, d'une part, ladite chambre de cuisson pour le traitement des produits est équipée d'une pompe à vide (35) permettant de pratiquer dans celle-ci, hermétiquement fermée par des joints (20) du tiroir (18), une cuisson sous vide à température réduite, ainsi que de moyens permettant d'effectuer la cuisson non seulement par pulvérisation d'huile ou par vaporisation d'eau ou de vapeur au moyen d'un réseau de rampes à buses supérieures (8) et inférieures (8'), mais également la cuisson par immersion, le liquide arrivant par la rampe à buses supérieure (8) formant dans ce cas des jets qui permettent d'agiter les produits pour éviter qu'ils ne se collent entre eux, favorisant ainsi l'échange thermique, ceci se faisant dans la chambre de cuisson (1) fermée hermétiquement et, d'autre part, la chambre thermique (2) où se trouvent les moyens de montée en température de l'élément liquide, tel que huile ou eau, constitués d'un chemin préférentiel (4) formé d'un conduit immergé dans l'élément liquide et muni de fourreaux électriques (5), par lequel une pompe (6) aspire l'élément liquide de ladite chambre thermique et l'envoie sous pression dans le réseau de rampes à buses (8, 8') situées dans la chambre de cuisson (1), pour les pulvériser ou les vaporiser sur les produits à cuire.

2. Dispositif suivant la revendication 1, caractérisé en ce que le fond de la chambre de cuisson (1) est constitué d'une capacité (30) à plan incliné (9) récupérant les éléments liquides et comportant une vanne (31) par laquelle ces derniers retournent dans la chambre thermique (2) à travers des filtres démontables (10), la fermeture de cette vanne permettant la cuisson par immersion, des fourreaux électriques (29) disposés sous ledit plan incliné étant utilisés pour la cuisson par immersion ou en vapeur fluente.

3. Dispositif suivant l'une quelconque des revendications précédentes, caractérisé par un réservoir supérieur (13) permettant, d'une part, de maintenir constant le niveau de l'élément liquide dans la chambre thermique (2), au fur et à mesure de l'absorption en cours de cuisson, d'autre part, de stocker la totalité de l'élément liquide au moyen de la pompe (6), en fermant une première vanne (15) et en ouvrant une seconde vanne (16), pour permettre de changer le mode de cuisson, en passant par exemple de la pulvérisation d'huile à la vaporisation d'eau sans pour cela jeter l'huile, un cordon chauffant (56) permettant dans ce réservoir (13) de faire fondre l'huile figée ou les graisses spéciales pouvant être utilisées.

4. Dispositif suivant l'une quelconque des revendications précédentes, caractérisé par le fait que la chambre de cuisson (1) comporte un trop-plein (34) destiné, dans le cas de cuisson par immersion, à déverser l'excédent de l'élément liquide vers la chambre thermique (2), en même temps que les amidons et les peaux des produits de cuisson, qui sont récupérés par les filtres démontables (10).

5. Dispositif suivant l'une quelconque des revendications précédentes, caractérisé par une salamandre-grill (22) située dans la chambre de cuisson (1), servant à gratiner les aliments, mais ne pouvant à aucun moment fonctionner pendant la pulvérisation d'huile, pour éviter les risques d'inflammation.

6. Dispositif suivant l'une quelconque des revendications précédentes, caractérisé par une turbine tangentielle (26) avec un réseau de résistances électriques (27) situées dans la chambre de cuisson (1) et permettant la cuisson par air pulsé ou vapeur surchauffée.

7. Dispositif suivant la revendication 1, caractérisé en ce qu'il est équipé d'un compresseur (39), d'évaporateurs (40, 41) avec leurs turbines (42, 43) et d'un réseau de récupération (44) des eaux de dégivrage permettant au dispositif de refroidir des produits qui ont été cuits, et que les joints (20 et 20') du tiroir (18) sont éventuellement gonflants, aptes à obtenir une étanchéité parfaite de la chambre de cuisson (1) et de réfrigération, le joint (20') au fond du tiroir (18) venant fermer la chambre de cuisson ou de réfrigération, lorsque le tiroir est tiré sur un tapis à galets (45) pour son chargement ou déchargement, de manière à éviter l'échappement de la vapeur ou du froid hors du dispositif pendant cette manipulation.

## Claims

1. Device comprising a cooking unit using different means: by oil, water or pressurized steam spray, with continuous filtering, and comprising a separate cooking chamber (1) and heat chamber (2), in which the cooking chamber is fitted with a tray (18) for introducing and removing products, together with the means (8, 8') for cooking either by oil spray or water spray, the heat chamber which contains the means for increasing the temperature (4, 5) of a liquid such as oil or water, being provided with the means for maintaining the liquid level constant,
characterized by the fact that the cooking chamber (1) and heat chamber (2) are entirely separated and, on the one hand, the said product cooking chamber is fitted with a vacuum pump (35) so that, in the said chamber sealed by the rack (18) seals (20), cooking takes place at reduced temperature in a vacuum, and means for cooking not only by oil or water or steam spray using an upper network (8) and a lower network (8') of spray lines but also cooking by immersion, the liquid arriving by the upper spray line (8) which in this case creates jets which agitate the products to avoid them sticking, thereby encouraging the heat exchange, all this taking place in the sealed cooking chamber (1) and, on the other hand, the heat chamber (2) containing the means for heating the liquid, such as oil or water, and comprising a preferential line (4) formed of a pipe submerged in the liquid element with electric sleeves (5) through which a pump (6) draws up the liquid from the said heat chamber and dispatches it under pressure into the spray lines (8, 8') situated in the cooking chamber (1) in order to spray or vaporize it over the products to be cooked.

2. Device as per claim 1 characterized in that the bottom of the cooking chamber (1) consists of a tank (30) with inclined plane (9) which recovers the liquids and has a valve (31) through which the latter return into the heat chamber (2) through removable filters (10), closure of this valve allowing cooking by immersion, the electric sleeves (29) arranged under the said inclined plane being used for cooking by immersion and steam flux.

3. Device as per any one of the aforesaid claims, characterized by an upper tank (13) for, on the one hand, maintaining the level of the liquid in the heat chamber (2) constant as it is absorbed by cooking and, on the other hand, for storing all the liquid by use of the pump (6), by closing a first valve (15) and by opening a second valve (16), to allow the cooking method to be changed, tranferring for instance from an oil spray to a water spray without discarding the oil, a cord resistor (56) so that the oil or the special greases which may be used in this tank (13) can be melted.

4. Device as per any one of the aforesaid claims characterized by the cooking chamber (1) having an overflow (34) intended, in the case of cooking by immersion, to discharge the excess liquid into the heat chamber (2) at the same time as the starches and the skins of cooking products, which are recovered by removable filters (10).

5. Device as per any one of the aforesaid claims characterized by a grill (22) situated in the cooking chamber (1) used to grill the foodstuffs, but at no time being capable of operating during oil pulverisation, to avoid the risks of fire.

6. Device as per any one of the aforesaid claims characterized by a tangential turbine (26) with network of electric resistances (27) situated in the cooking chamber (1) for cooking by heated air or superheated steam.

7. Device as per claim 1 characterized in that it is equipped with compressor (39), evaporators (40, 41) with their turbines (42, 43) and a network (44) for recovery of the defrosting water to allow the device to cool the products which have been cooked, and with rack (18) seals (20 and 20') which may be inflatable so as to achieve perfect leaktightness of cooking (1) and cooling chamber, the seal (20') at the bottom of the rack (18) then closing the cooking or cooling chambers when the rack is drawn out on a roller belt (45) for loading or unloading so as to avoid any steam or cold escaping outside the device during this manipulation.

## Patentansprüche

1. Einheit zum Garen mit verschiedenen Mitteln: Aufsprühen von Öl, Wasser oder Dampf unter Druck, mit kontinuierlichem Filtern, mit getrennten Gar- (1) und Wärmekammern (2), wobei die Garkammer mit einem Schieber (18) zum Einführen und zum Entleeren der zu behandelnden Produkte sowie mit Mitteln (8, 8') ausgestattet ist, die das Garen entweder zur Aufsprühen von Öl oder die Zerstäubung von Wasser ermöglichen, und außerdem die Wärmekammer, in der sich die Mittel zur Temperaturerhöhung des flüssigen Mediums, wie Öl oder Wasser, befinden, mit einer Vorrichtung ausgerüstet ist, welche ermöglicht, den Flüssigkeitsstand konstant zu halten,
dadurch gekennzeichnet, daß die Garkammer (1) und die Wärmekammer (2) vollständig getrennt sind und daß, einerseits die besagte Garkammer für die Behandlung der Produkte mit einer Vakuumpumpe (35) ausgerüstet ist, die ermöglicht, in dieser durch die Dichtungen (20) des Schiebers (18) hermetisch verschlossenen Kammer eine Vakuum-Garung bei verminderter Temperatur auszuführen, sowie mit Mitteln, die eine Garung nicht nur durch Aufsprühen von Öl oder Zerstäubung von Wasser oder Dampf mittels eines Rampensystems mit oberen (8) und unteren (8') Düsen ermöglichen, sondern auch das Kochen im Tauchverfahren, wobei die Flüssigkeit durch die obere Rampe (8) eingesprüht wird und in diesem Fall Strahlen bildet, welche ermöglichen die Produkte umzurühren, um zu vermeiden, daß sie untereinander zusammenbacken mit Begünstigung des Wärmeaustausches in der hermetisch verschlossenen Garkammer (1) und, andererseits, die Wärmekammer (2), in welcher sich die Mittel zum Erhitzen des flüssigen Mediums wie Öl oder Wasser befinden, bestehend aus einem von einer in das flüssige Medium eingetauchten Leitung gebildeten Vorzugsweg (4) und mit elektrischen Widerständen (5) ausgestattet ist, aus dem eine Pumpe (6) das flüssige Medium aus der besagten Wärmekammer ansaugt und unter Druck in das Düsenrampensystem (8, 8') in die Garkammer (1) fördert, um es auf die zu garenden Produkte zu sprühen bzw. zu zerstäuben.

2. Vorrichtung nach Anspruch 1, dadurch gekennzeichnet, daß der Boden der Garkammer (1) durch eine Kapazität (30) mit schräger Ebene (9) gebildet wird, in der die flüssigen Medien aufgefangen werden und die mit einem Schieber (31) versehen ist, durch welchen diese über auswechselbare Filter (10) in die Wärmekammer (2) zurücklaufen, wobei das Schließen dieses Schiebers das Kochen im Tauchverfahren ermöglicht und die unter der besagten schrägen Ebene angebrachten elektrischen Widerstände (29) für das Kochen im Tauchverfahren bzw. unter Dampf dienen.

3. Vorrichtung nach irgendeinem der vorhergehenden Ansprüche, gekennzeichnet durch einen oberen Behälter (13), welcher erlaubt, einerseits den Stand des flüssigen Mediums in der Wärmekammer (2) im Laufe seiner Absorption während des Garens konstant zu halten und, andererseits die Gesamtheit des flüssigen Mediums mittels der Pumpe (6) durch Verschluß eines ersten Schiebers (15) und Öffnen eines zweiten Schiebers (16) zu speichern, um eine Änderung der Garungsart zu ermöglichen, indem z.B. von dem Aufsprühen von Öl zur der Zerstäubung von Wasser übergegangen wird ohne das Öl zu entleeren, wobei eine Heizschnur (56) ermöglicht, in diesem Behälter (13) das erstarrte Öl oder andere zum Garen verwendete Fette zu verflüssigen.

4. Vorrichtung nach irgendeinem der vorhergehenden Ansprüche, dadurch gekennzeichnet, daß die Garkammer (1) mit einem Überlauf (34) versehen ist, dazu bestimmt, im Fall von Kochen im Tauchverfahren den Überschuß des flüssigen Mediums zu der Wärmekammer (2) zu leiten und dabei die Stärken und die Schalen der zu garenden Produkte mitzunehmen, welche von den austauschbaren Filtern (10) aufgefangen werden.

5. Vorrichtung nach irgendeinem der vorhergehenden Ansprüche, gekennzeichnet durch einen in der Garkammer (1) angeordneten Grillrost (22), der dazu dient die Speisen zu überbacken aber in keinem Fall während dem Aufsprühen von Öl in Betrieb genommen werden kann, um jegliche Brandgefahr auszuschließen.

6. Vorrichtung nach irgendeinem der vorhergehenden Ansprüche, gekennzeichnet durch eine in der Garkammer (1) mit einem Netz elektrischer Widerstände angeordneten Querstromturbine (26), welche das Garen im Luft- bzw. Heißdampfstrom ermöglicht.

7. Vorrichtung nach Anspruch 1, dadurch gekennzeichnet, daß sie ausgerüstet ist mit einem Verdichter (39), Verdampfern (40, 41) mit ihren Turbinen (42, 43) und einem Auffangsystem (44) für Enteisungswasser, welche der Vorrichtung ermöglichen, die gegarten Produkte zu kühlen, und daß die Abdichtungen (20 und 20') des Schiebers (18) gegebenenfalls aufblähend ausgeführt sind, geeignet eine einwandfreie Dichte und Kühlung der Garkammer (1) zu erreichen, wobei die Abdichtung (20') am hinteren Ende des Schiebers (18) die Gar- bzw. Kühlkammer schließt, wenn der Schieber auf den Rollenförderer (45) zum Beschicken bzw. Entleeren gezogen wird, um während dieser Handhabung ein Entweichen des Dampfes oder der Kälte aus der Kammer zu vermeiden.
